# EUROPEAN PATENT SPECIFICATION

(11) **EP 0 920 227 B1**
(45) Date of publication and mention of the grant of the patent: **20.07.2005**
(21) Application number: 98308485.6
(22) Date of filing: 19.10.1998
(51) Int. Cl.: H04Q 7/32

(54) **Method for re-transmitting short message upon transmission failure in mobile radio terminal**
Kurznachrichten-Sendewiederholungsverfahren bei Übertragungsfehler in einem mobilen Funkendgerät
Procédé de re-transmission de message court en cas de défaillance de transmission dans un terminal radio mobile

(30) Priority: 18.10.1997 KR 5365397
(43) Date of publication of application: 02.06.1999
(73) Proprietor: Samsung Electronics Co., Ltd., Suwon, Kyunggi-do (KR)
(72) Inventor: Hye-Young, Lee, Seoul (KR)
(74) Representative: Boakes, Jason Carrington

(56) References cited:
- EP-A- 0 751 627
- EP-A- 0 783 219
- WO-A-96/42175

## Description

The present invention relates to a short message service for a mobile radio terminal, and in particular, to a method for re-transmitting a short message failed to be transmitted in a mobile radio terminal.

A short message service (hereinafter, referred to as SMS for short) enables message communication between mobile radio terminals, or between a mobile radio terminal and a wired telephone. In the latter case, the short messages from a fixed communication network (e.g., a PSTN (Public Switched Telephone Network) or an ISDN (Integrated Services Digital Network)) are stored in a processing unit of a mobile communication network, converted to digital data and then transmitted to the mobile radio terminal.

In a mobile radio terminal, such as a GSM (Global Systems for Mobile communication) telephone, when the mobile radio terminal is in a no-service state or cannot access a base station for whatever reason, it fails to transmit the short messages. Conventionally, in case of transmission failure, the mobile radio terminal is switched to an idle state or other operating state, regardless of the user's intention to retransmit the short message. Therefore, the user must re-input the short message and other data, even when he wishes to retransmit the same short message.

EP 0751627 partially addresses this problem and provides a method for retransmitting failed short messages. However a user is still required to input further information to enable retransmission to occur.

It is therefore an aim of the present invention to address this problem.

According to a first aspect of the present invention there is provided a method for retransmitting a short message failed to be transmitted in a mobile radio terminal, comprising:
transmitting a short message;
determining whether the short message has successfully been transmitted; and
determining if a retransmission function has been selected by a user; characterised in that if it is determined that the retransmission function is selected the short message is retransmitted without further input from the user.

Advantageously the method may comprise:
determining in an idle state of the mobile radio terminal that a message key has been operated;
accordingly, displaying a message menu;
determining that a user has selected a message transmission function from the message menu displayed;
editing a short message by receiving a destination address, a call back number and user data input by a user;
transmitting the edited short message;
determining that an acknowledge short message is not received so as to determine that the short message has not been transmitted successfully;
determining that a user has set a transmission function; and
retransmitting the short message function.

The present invention will now be described by way of example with reference to the accompanying drawings in which:
FIG. 1 is a block diagram of an SMS system for a mobile radio terminal to which the present invention is applied; and
FIG. 2 is a flow chart illustrating a method for retransmitting a short message upon transmission failure according to the present invention.

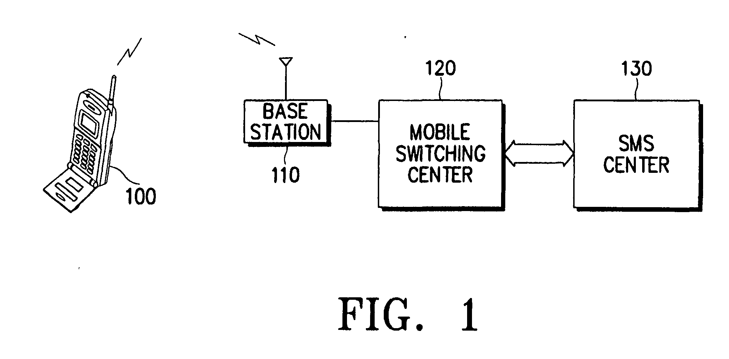

Referring to FIG. 1, it is assumed that a mobile radio terminal 100 transmits a short message to a base station 110. A mobile switching centre 120 acknowledges receipt of the short message to the mobile radio terminal 100, and transfers the received short message to another mobile radio terminal called by the mobile radio terminal 100. An SMS centre 130, connected to other mobile switching centres (or the PSTNs and ISDNs), stores the short message received from the mobile switching centre 120 and transfers it to another mobile switching centre.

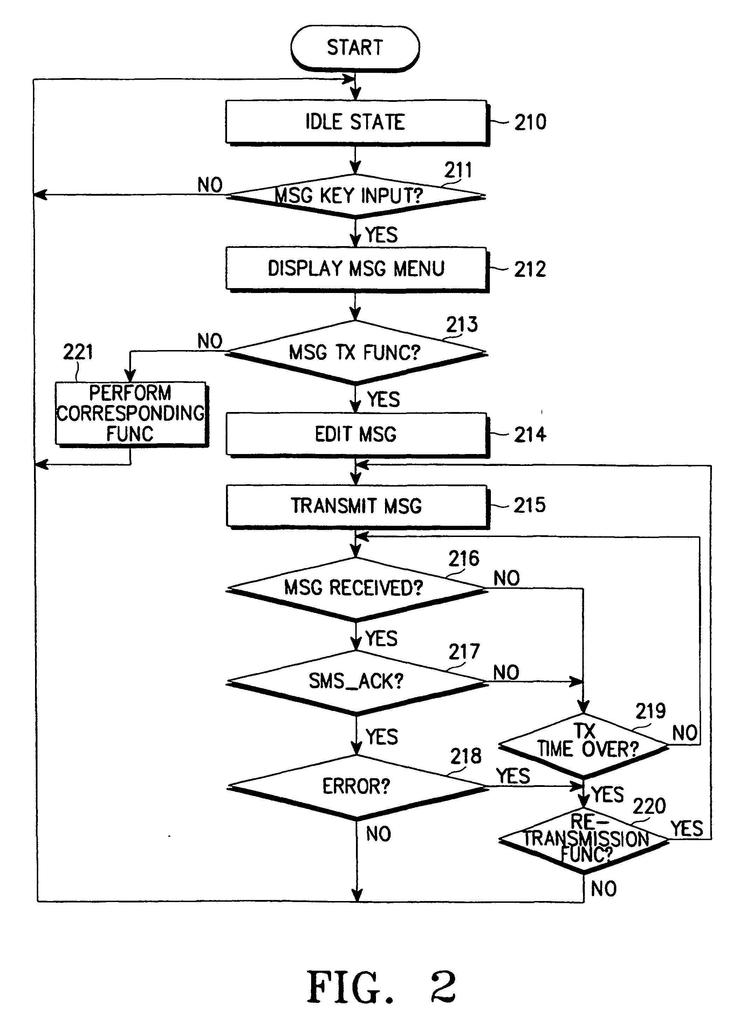

Referring to FIG. 2, a controller of the mobile radio terminal 100 which is in the idle state in step 210 determines in step 211 whether a message key is input. If the message key is input, the controller displays a message menu in letters on a display in step 212. The message menu may include a message transmission function, a message reception function, and so forth. For example, the transmission function may include a cellular paging transmission function and a cellular message transmission function.

After displaying the message menu, the controller checks in step 213 whether the message transmission function is chosen by the user. If it is determined that the message transmission function is not chosen, the controller performs a corresponding function in step 221 and then returns to the step 210. On the contrary, if it is determined that the message transmission function is chosen by the user, the controller of the mobile radio terminal 100 edits the short message in step 214. In editing the short message, the user will change a destination address (phone number of the destination), a call back number (phone number of the origination), user data (contents of the short message) and other necessary data such as message field data by using a user interface (i.e., keypad), to compose a short message to be transmitted. For example, the user can compose the contents of the short message to be transmitted by editing the frequently used short messages stored in the mobile radio terminal 100 or by using the character buttons.

In step 215, the controller transmits the edited short message to the mobile switching centre 120 via the base station 110. The mobile switching centre 120 then transmits a given short message to the mobile radio terminal 100 upon receipt of the short message. The controller then checks in step 216 whether the short message is received from the mobile switching centre 120. If it is determined that the short message is received, the controller determines in step 217 whether the received short message is an acknowledge short message SMS_ACK. If it is the acknowledge short message SMS_ACK, the controller analyses in step 218 a specific field of the acknowledge short message SMS_ACK to determine whether there has occurred a transmission error. For example, when the specific field is set to "1", the controller determines that a transmission error has occurred, and otherwise, determines that the short message has been transmitted successfully.

When the short message is normally transmitted in the step 218, the procedure returns to the step 210. However, when a transmission error has occurred, it is determined in step 220 whether the user chooses a retransmission function. If it is determined that the user chooses the retransmission function, the procedure returns to the step 215 to retransmit the same short message. However, if it is determined that the user does not choose the retransmission function, the controller returns to the idle state of the step 210.

If the short message is not received from the mobile switching centre 120 in the step 216 or the received short message is not the acknowledge short message SMS_ACK in the step 217, it is checked in step 219 whether a predetermined transmission time has elapsed. If such a transmission time has elapsed, the procedure proceeds to the step 220, and otherwise, returns to the step 216.

Instead of analysing the acknowledge short message SMS_ACK, the controller of the mobile radio terminal 100 may check whether a delivery acknowledge message or a user acknowledge message is received, to determine whether a transmission error has occurred. In the former case, a short message transmission option should be set to a delivery acknowledge option and in the latter case, it should be set to a user acknowledge option. When the SMS centre 130 receives the short message set to the delivery acknowledge option, it acknowledges receipt of the message to the originating terminal, transmits the short message to the destination terminal and then transmits the delivery acknowledge message to the originating terminal via the mobile switching centre 120. When the destination terminal receives a message set to the user acknowledge option, it transmits the user acknowledge message to the SMS centre 130 and the SMS centre 130 then transmits the received user acknowledge message to the originating terminal via the mobile switching centre 120.

As described above, in the case of a transmission failure, the mobile radio terminal inquires of the user whether to retransmit the failed short message and retransmits the short message when the user wishes to do. Therefore, the user need not input the same message again.

## Claims

1. A method for retransmitting a short message failed to be transmitted in a mobile radio terminal (100), comprising:
transmitting a short message;
determining whether the short message has successfully been transmitted; and
determining if a retransmission function has been selected by a user; **characterised in that** if it is determined that the retransmission function is selected the short message is retransmitted without further input from the user.

2. A method according to claim 1, comprising:
determining in an idle state of the mobile radio terminal (100) that a message key has been operated;
accordingly, displaying a message menu;
determining that the user has selected a message transmission function from the message menu displayed;
editing a short message by receiving a destination address, a call back number and user data input by a user;
transmitting the edited short message;
determining that an acknowledge short message is not received so as to determine that the short message has not been transmitted successfully;
determining that a user has set a retransmission function; and
retransmitting the short message function.

## Patentansprüche

1. Verfahren zum Neusenden einer Kurznachricht, die in einem Mobilfunkterminal (100) nicht gesendet wurde, umfassend die folgenden Schritte:
Senden einer Kurznachricht;
Ermitteln, ob die Kurznachricht erfolgreich gesendet wurde; und
Ermitteln, ob eine Neusendefunktion von einem Benutzer gewählt wurde;
**dadurch gekennzeichnet, dass**, wenn festgestellt wird, dass die Neusendefunktion gewählt ist, die Kurznachricht ohne weitere Eingabe durch den Benutzer erneut gesendet wird.

2. Verfahren nach Anspruch 1, umfassend die folgenden Schritte:
Feststellen in einem Ruhezustand des Mobilfunkterminals (100), dass eine Nachrichtentaste betätigt wurde;
dementsprechend Anzeigen eines Nachrichtenmenüs;
Feststellen, dass der Benutzer eine Nachrichtensendefunktion von dem angezeigten Nachrichtenmenü gewählt hat;
Bearbeiten einer Kurznachricht durch Empfangen einer Zieladresse, einer Rückrufnummer und einer Benutzerdateneingabe durch einen Benutzer;
Senden der bearbeiteten Kurznachricht;
Feststellen, dass keine Bestätigungskurznachricht empfangen wurde, um festzustellen, dass die Kurznachricht nicht erfolgreich gesendet wurde;
Feststellen, dass ein Benutzer eine Neusendefunktion eingestellt hat; und Neusenden der Kurznachrichtenfunktion.

## Revendications

1. Procédé servant à retransmettre un court message qu'un poste radio mobile (100) n'a pas réussi à transmettre, comprenant les étapes suivantes :
transmettre un court message ;
déterminer si le court message a été transmis de façon satisfaisante ou non ; et
déterminer si une fonction de retransmission a été sélectionnée par un utilisateur ; **caractérisé en ce que**, lorsqu'il a été déterminé que la fonction de retransmission a été sélectionnée, le court message sera retransmis sans aucune autre opération d'introduction de la part de l'utilisateur.

2. Procédé, selon la revendication 1, comprenant les étapes suivantes :
déterminer, dans un état d'inactivité du poste radio mobile (100), qu'une touche de message a été actionnée ;
en conséquence, afficher un menu de message ;
déterminer que l'utilisateur a sélectionné une fonction de transmission de messages à partir du menu de message qui est affiché ;
éditer un court message grâce à la réception d'une adresse de destination, d'un numéro de rappel et des données utilisateur dont l'introduction est effectuée par un utilisateur ;
transmettre le court message édité ;
déterminer qu'un court message d'accusé de réception n'est pas reçu de sorte à déterminer que le court message n'a pas été transmis de façon satisfaisante ;
déterminer qu'un utilisateur a établi une fonction de retransmission ; et
retransmettre la fonction de message court.
